# EUROPEAN PATENT SPECIFICATION

(11) **EP 3 569 496 B1**
(45) Date of publication and mention of the grant of the patent: **14.07.2021**
(21) Application number: 19184480.2
(22) Date of filing: 13.02.2017
(51) Int. Cl.: B64C 1/18, B64D 13/08, F24D 13/02

(54) **HEATED AIRCRAFT FLOOR PANELS**
BEHEIZTE FLUGZEUGBODENPLATTEN
PANNEAUX DE PLANCHER CHAUFFÉS D'AÉRONEF

(30) Priority: 12.02.2016 US 201662294954 P
(43) Date of publication of application: 20.11.2019
(62) Divisional of application: 17155855.4
(73) Proprietor: Goodrich Corporation, Charlotte, NC 28217-4578 (US)
(72) Inventor: OWENS, George, Akron, OH 44319 (US); ROACH, Kevin E., Stow, OH 44224 (US); MULLEN, James, Wadsworth, OH 44281 (US); SHEARER, Jon, Hartville, OH 44632 (US); TWISK, James V., North Canton, OH 44720 (US); BRITTINGHAM, David L., Canton, OH 44718 (US); WILSON, Tom, Cuyahoga Falls, OH 44223 (US); HU, Jin, Hudson, OH 44236 (US); VERONESI, William A., Hartford, CT 06114 (US); GURVICH, Mark R., Middletown, CT 06457 (US); WINESDOERFFER, Joseph, Canton, OH 44718 (US); GESNER, Jason, Maxwelton, WV 24957 (US); GIAMATI, Michael J., Akron, OH 44312 (US)
(74) Representative: Dehns

(56) References cited:
- US-A- 3 465 121
- US-A1- 2002 153 368
- US-A1- 2002 168 184
- US-A1- 2004 100 131
- US-A1- 2012 234 819
- US-B1- 6 834 159

## Description

### BACKGROUND OF THE INVENTION

### 1. Field of the Invention

The present disclosure relates to heating circuits, and more particularly to heating circuits for floor panels in aircraft.

### 2. Description of Related Art

Aircraft entryways and galley areas often need local heating for crew and passenger comfort. Some aircraft entryways and galley areas have floor panels with heating elements incorporated into the floor panel, typically with an etched foil heater element supported within the floor panel below a sheet metal surface of the panel. The etching process to form such resistive heating elements can be relatively involved and entail multiple process operations to arrive at the heating element structure. While generally satisfactory for its intended purpose, the traditional etch process can be time consuming, pose manufacturing challenges and/or operational delays due to over-etch or under etch (making resistance of the resistive heating element either too low or too high), or be susceptible to defects due to the photo-print process. Such defects can lead to failure in the field due to mechanical fatigue and/or thermal cycling of the resistive heating element over time. The heating elements can also be susceptible to fluid intrusion, and mechanical damage during installation and/or operation, and repair can be challenging. US 6,834,159 teaches an aircraft heated floor panel. Document US 6834159 relates to an aircraft floor panel including a plurality of layers cured to form a lower support level, an upper heater level, and a top metal sheet for protecting the underlying layers from floor-traffic related damage.

Such conventional methods and systems have generally been considered satisfactory for their intended purpose. However, there is still a need in the art for aircraft floor panels with improved properties, such as manufacturability, mechanical strength, damage resistance, and/or damage tolerance. The present disclosure provides a solution for this need.

### SUMMARY OF THE INVENTION

An aircraft heated floor panel is provided as defined by claim 1.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic cross-section side view of an exemplary embodiment of an aircraft interior, showing a heated floor panel supported within the aircraft interior;
Fig. 2 is a schematic cross-sectional side view of the aircraft heated floor panel of Fig. 1, showing a core with an electrically conductive core portion, according to an embodiment;
Fig. 3 is a schematic cross-sectional side view of the aircraft heated floor panel of Fig. 1, showing a core with an electrically conductive core portion adjacent to a second face sheet of the heated floor panel, according to an embodiment;
Fig. 4 is a schematic cross-sectional side view of the aircraft heated floor panel of Fig. 1, showing a core with an electrically conductive core portion adjacent to a first face sheet of the heated floor panel, according to an embodiment;
Fig. 5 is a schematic cross-sectional side view of the aircraft heated floor panel of Fig. 1, showing a core with a centrally disposed electrically conductive core portion, according to an embodiment; and
Fig. 6 is chart of a method of making a heated floor panel, showing steps of the method.

### DETAILED DESCRIPTION OF THE PREFERRED EMBODIMENTS

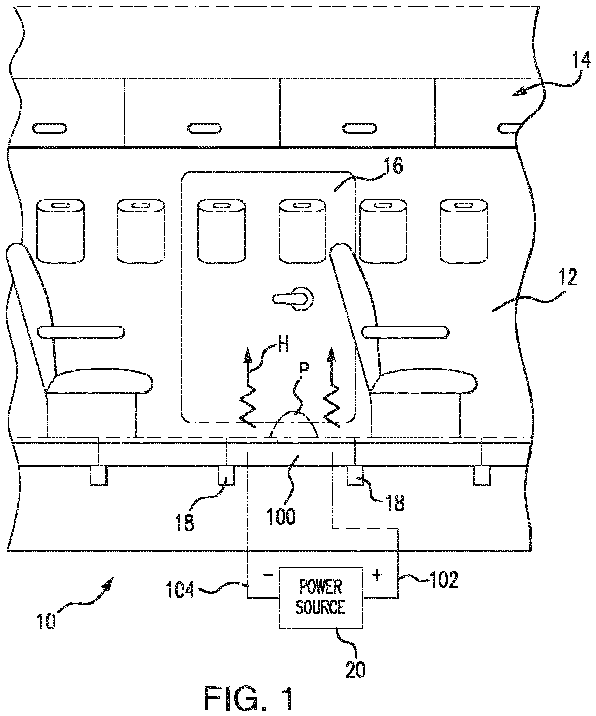

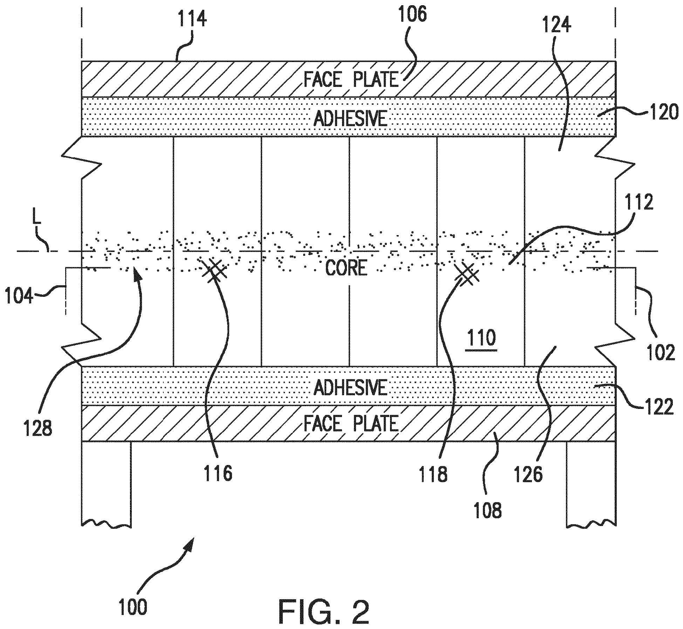

Reference will now be made to the drawings wherein like reference numerals identify similar structural features or aspects of the subject disclosure. For purposes of explanation and illustration, and not limitation, a partial view of an exemplary embodiment of an aircraft interior having a heated floor panel in accordance with the disclosure is shown in Fig. 1 and is designated generally by reference character 10. Other embodiments of heated floor panels and methods of making heated floor panels in accordance with the disclosure, or aspects thereof, are provided in Figs. 2 - 6, as will be described. The systems and methods described herein can be used for reducing or eliminating moisture from aircraft galley areas, however the heated floor panels described herein are not limited to a particular aircraft interior location nor to aircraft in general.

Referring now to Fig. 1, aircraft 10 is shown. Aircraft 10 includes a fuselage 12 bounding an aircraft interior 14. Aircraft interior 14 is externally accessible through an access door 16, which generally provides access to aircraft interior for passengers, crew, or service. As will be appreciated by those of skill in the art, precipitation can sometimes enter aircraft interior 14 through access door 16. Accordingly, heated floor panel 100 is disposed proximate to access door 16, is supported about its perimeter by supports 18, and is configured and adapted for providing heat H to aircraft interior 14 through a surface of heated floor panel. It is contemplated that heated floor panel be configured with sufficient heating capacity to remove precipitation P from the exterior surface of heated floor panel 100, such as snow or ice that may enter through access door 16, enabling the top surface of heated floor panel 100 to remain dry. Heating capacity is provided by a power source 20 carried by aircraft 10 and connected to heated floor panel 100 by a source lead 102 and a return lead 104.

In the illustrated exemplary embodiment, heated floor panel 100 is one of a plurality of heated floor panels arrayed within aircraft interior 14 in order to maintain the aircraft cabin at a comfortable temperature. Exemplary heated floor panel 100 includes a first face sheet 106 (shown in Fig. 2) that may be of metal construction, e.g., formed from aluminum or aluminum-alloy containing material. First face sheet 106 forms the top surface of heated floor panel 100 to protect a core 110 (shown in Fig. 2) against punctures from high heels, chips from dropped objects, scratches from dragged luggage and/or other floor-traffic related hazards. As is explained in more detail below, the arrangement of core 110 allows for puncture of first face sheet 106 without an associated reduction of the heating capacity of heated floor panel 100.

With reference to Fig. 2, heated floor panel 100 is shown in a partial longitudinal cross-sectional view. Heated floor panel 100 includes a first face sheet 106, a second face sheet 108 opposite first face sheet 106, and a core 110 with a conductive core portion 112. Conductive core portion 112 supports first face sheet 106 and second face sheet 108. Conductive core portion 112 is also electrically insulated from the external environment, e.g., aircraft interior 12 (shown in Fig. 1) by first face sheet 106 and second face sheet 108 such that an electric current can be applied to conductive core portion 112 to resistively heat first face sheet 106 and remove moisture, e.g., precipitation P (shown in Fig. 1), from a surface 114 of first face sheet 106 opposite core 110.

First face sheet 106 can include a reinforced prepreg layer. An optional adhesive layer 120 may be interposed between first face sheet 106 and core 110, optional adhesive layer 120 coupling first face sheet 106 to core 110. Second face sheet 108, can be similar to first face sheet 106 with the difference that it is disposed on a side of core 110 opposite first face sheet 106. An optional adhesive layer 122 can couple second face sheet 108 to core 110.

Core 110 includes a honeycomb body 116 or a foam body 118 that extends between a surface of core 110 adjacent to first face sheet 106 and an opposite surface of core 110 adjacent to second face sheet 108. A portion of honeycomb body 116 or foam body 118 of core 110 defining conductive core portion 112 includes a conductive material 128, which may be a conductive layer conformally disposed over honeycomb body 116 or a foam body 118. Alternatively, the conductive material 128 may be a dopant disposed within honeycomb body 116 or foam body 118 of core 110 defining conductive core portion 112. Source lead 102 and return lead 104 each electrically connect to core 110, thereby forming a resistive heating circuit with conductive core portion 112 that structurally supports either or both of first face sheet 106 and second face sheet 108.

Heated floor panel 100 defines a longitudinal axis L. Longitudinal axis L extends longitudinally through core 110, and is disposed between first face sheet 106 and second face sheet 108. In the illustrated exemplary embodiment, longitudinal axis L extends through conductive core portion 112, and core 110 further includes a first insulating core portion 124 and a second insulating core portion 126. First insulating core portion 124 is disposed between conductive core portion 112, laterally between longitudinal axis L and first face sheet 106. Second insulating core portion 126 is disposed laterally between longitudinal axis L and second face sheet 108.

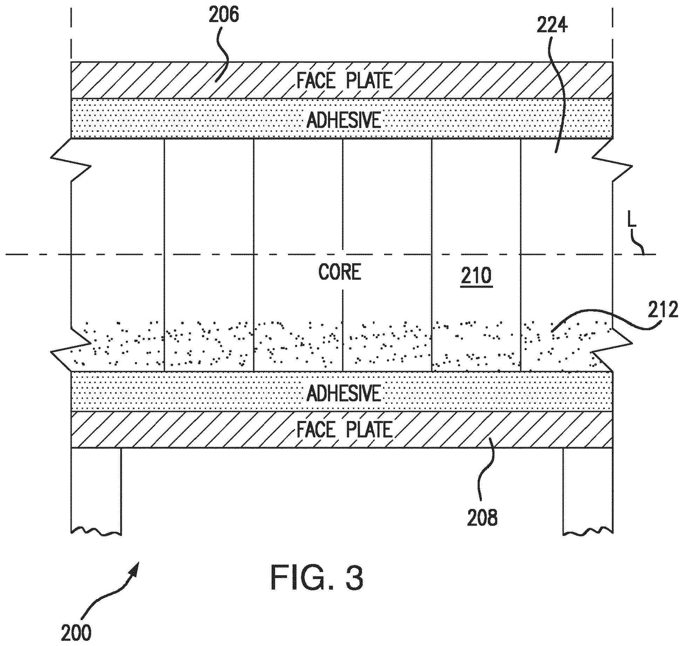

With reference to Fig. 3, a heated floor panel 200 is shown. Heated floor panel 200 is similar to heated floor panel 100 with the difference that core 210 has a conductive core portion 212 is disposed between longitudinal axis L and second face sheet 208, and an insulating core portion 224 extending from a side of longitudinal axis L adjacent to second face sheet 208 to a side of core 210 adjacent to first face sheet 206. This improves the resistance of heated floor panel 200 to performance loss due to penetration of first face sheet because an object penetrating first face sheet 206 would need to traverse the entire lateral width of insulating core portion 224 prior to reaching conductive core portion 212.

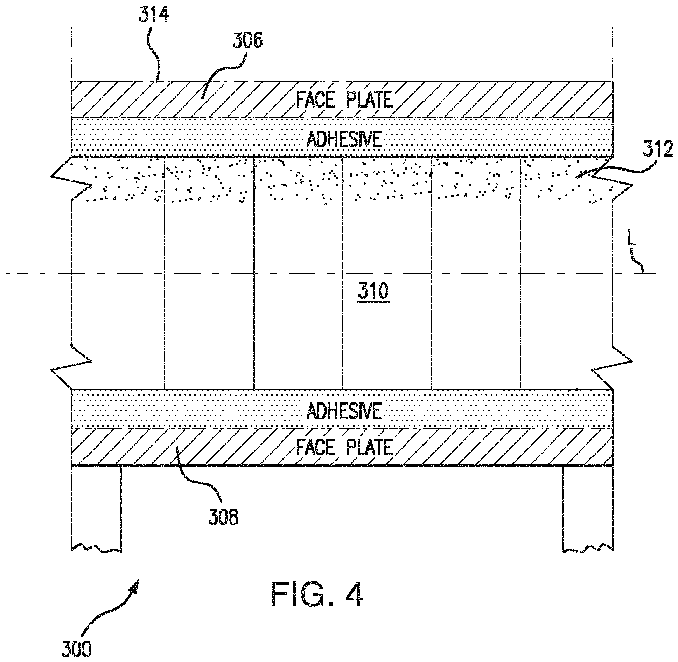

With reference to Fig. 4, a heated floor panel 300 is shown. Heated floor panel 300 is similar to heated floor panel 100 with the difference that core 310 has a conductive core portion 312 is disposed between longitudinal axis L and first face sheet 306 and an insulating core portion 324 extending from a side of longitudinal axis L adjacent to first face sheet 306 to a side of core 310 adjacent to second face sheet 308. This positions conductive core portion 312 proximate to surface 314, reducing the time required from when electrical current is applied to when heat reaches surface 314 due to the reduced thermal mass between conductive core portion 312 and surface 314.

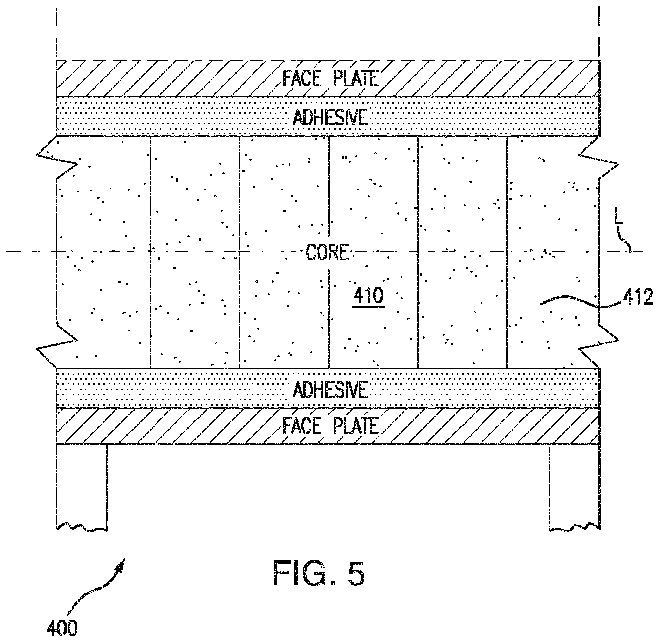

With reference to Fig. 5, a heated floor panel 400 is shown. Heated floor panel 400 is similar to heated floor panel 100 with the difference that a core 410 has a conductive core portion 412 that laterally spans substantially the entire lateral width (i.e. thickness) between a side of core 410 adjacent to first face sheet 406 and a side of core 410 adjacent to second face sheet 408. This increases the volume within core 410 occupied by conductive core portion 412, increasing the heating capability of heated floor panel 400.

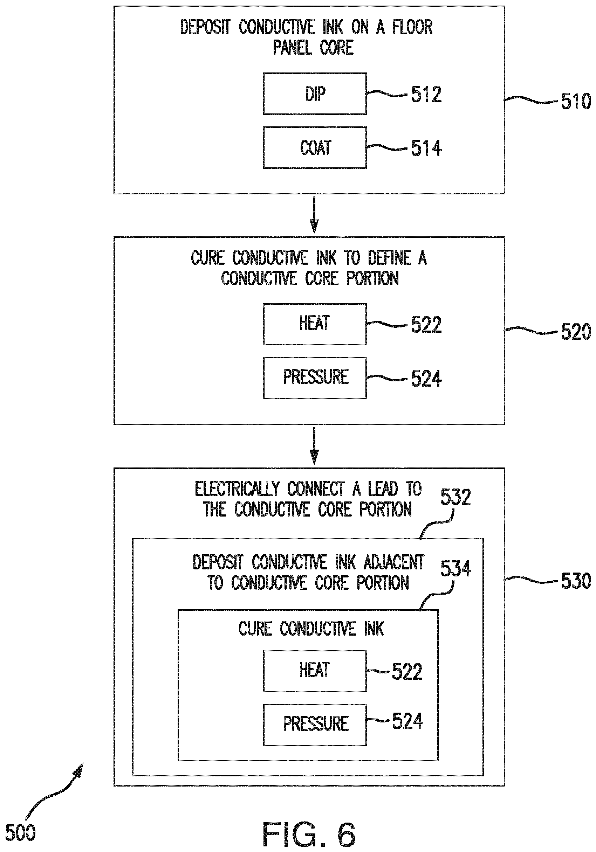

With reference to Fig. 6, a method 500 of making a heated floor panel is shown. Method 500 generally includes depositing conductive ink, e.g., a suspension including conductive material 128 (shown in Fig. 2), within a floor panel core, e.g., core 110 (shown in Fig. 2), as shown with box 510. Method 500 also includes curing the conductive ink to define a conductive core portion, e.g. conductive core portion 112 (shown in Fig. 2), within the core as shown with box 520. Method 500 further includes electrically connecting a lead, e.g. source lead 102 (shown in Fig. 1), to the conductive core portion, as shown with box 530.

Depositing the conductive ink can include dipping the floor panel core in the conductive ink, as shown with box 512. Depositing the can include coating the floor panel core with the conductive ink, as shown with box 514. Curing the conductive ink can include applying heat and/or pressure to the core, as shown with boxes 522 and 524.

Electrically connecting a lead to the conductive core portion can include connecting a copper film or wire structure to the conductive core portion. A conductive ink can also be selectively applied to the core that connects to the conductive core portion, as shown with box 532. Thereafter, the conductive ink can be cured to define the lead connected to the conductive core portion of the core, as shown with box 534. The cure can be a second cure involving a second application of heat and pressure, as shown with box 536 and 538. Alternatively, the initial deposition of the conductive ink can define both the conductive core portion and the lead.

Aircraft door and galley areas often require local heating for crew and passenger comfort. Heating elements, such as etched foil heaters bonded below the skin of the floor panel can be susceptible to fluid intrusion and mechanical damage during installation or operation. Localized repair can also be difficult owing to pattern defined within the foil.

In embodiments described herein, a portion of the floor panel core is partially or completely dipped in a conductive ink (e.g., positive temperature or ambient temperature) to define a conductive path on a surface, within a thickness portion, and through the entire thickness of the core. Leads connected to the conductive path, defined either using the conductive ink, copper foil, or any other suitable lead structure/material, are in intimate mechanical contact with dipped conductive core material and cured such that electrical connectivity is provided between the leads by the conductive path. This allows for repair of the heated floor panel structure, can reduce the number of layers used to form the heated floor panel, weight, and/or number of structural bond lines within the heated floor panel. It can also allow for positioning the heating circuit, i.e. the conductive core portion, away from the heated floor panel surface where localized damage can occur during installation, maintenance, and foreign objects. Moreover, the heating circuit may be arranged centrally within the heated floor panel, where structural loads are less severe.

The methods and systems of the present disclosure, as described above and shown in the drawings, provide for aircraft heated floor panels with superior properties, including uninterrupted core structures with integral heating circuits. While the apparatus and methods of the subject disclosure have been shown and described with reference to preferred embodiments, those skilled in the art will readily appreciate that changes and/or modifications may be made thereto without departing from the scope of the invention as defined by the claim.

## Claims

1. An aircraft heated floor panel, comprising:
a first face sheet (106);
a second face sheet (108) opposite the first face sheet;
a core (110) with an insulating core portion (124, 126) and a conductive core portion (112); and
a lead (102, 104) electrically connected to the conductive core portion,
wherein the insulating core portion separates the conductive core portion from the first face sheet,
wherein the insulating core portion and the conductive core portion both supporting the first face sheet and the second face sheet, and
wherein the conductive core portion is electrically insulated from the external environment by the first and second faces to resistively heat the first face sheet,
wherein the core defines a longitudinal axis extending between the first and second face sheets with conductive core portion disposed laterally between the longitudinal axis and either the first face sheet or the second face sheet, **characterised in that** the core includes a honeycomb body or a foam body that extends between a surface of the core adjacent to the first face sheet and an opposite surface of the core adjacent the second face sheet; and **in that**
a portion of the core defining the conductive core portion includes conductive material which is conformally disposed over the honeycomb body or foam body or which is a dopant disposed within the honeycomb body to one side or the other of the axis.

## Patentansprüche

1. Beheizte Luftfahrzeugbodenplatte, umfassend:
eine erste Deckschicht (106);
eine zweite Deckschicht (108) gegenüber der ersten Deckschicht;
einen Kern (110) mit einem isolierenden Kernabschnitt (124, 126) und einem leitenden Kernabschnitt (112); und
eine Leitung (102, 104), die elektrisch mit dem leitenden Kernabschnitt verbunden ist,
wobei der isolierende Kernabschnitt den leitenden Kernabschnitt von der ersten Deckschicht isoliert,
wobei der isolierend Kernabschnitt und der leitende Kernabschnitt beide die erste Deckschicht und die zweite Deckschicht stützen, und
wobei der leitende Kernabschnitt elektrisch von der äußerem Umgebung durch die erste und die zweite Deckschicht isoliert ist, um die erste Deckschicht mittels Widerstand zu heizen, wobei der Kern eine Längsachse definiert, die sich zwischen der ersten und der zweiten Deckschicht erstreckt, wobei der leitende Kernabschnitt seitlich zwischen der Längsachse und entweder der ersten Deckschicht oder der zweiten Deckschicht angeordnet ist, **dadurch gekennzeichnet, dass** der Kern einen Wabenkörper oder einen Schaumkörper beinhaltet, der sich zwischen einer Oberfläche des Kerns angrenzend an die erste Deckschicht und einer gegenüberliegenden Oberfläche des Kerns angrenzend an die zweite Deckschicht erstreckt;
und dadurch, dass ein Abschnitt des Kerns, der den leitenden Kernabschnitt definiert, leitendes Material beinhaltet, das formangeglichen über dem Wabenkörper oder dem Schaumkörper angeordnet ist oder das ein Dotierungsmittel ist, das innerhalb des Wabenkörpers auf einer Seite oder der anderen Seite der Achse angeordnet ist.

## Revendications

1. Panneau de plancher chauffé pour aéronef, comprenant :
une première feuille de face (106) ;
une seconde feuille de face (108) opposée à la première feuille de face ;
un noyau (110) avec une partie de noyau isolante (124, 126) et une partie de noyau conductrice (112) ; et
un conducteur (102, 104) relié électriquement à la partie de noyau conductrice,
dans lequel la partie de noyau isolante sépare la partie de noyau conductrice de la première feuille de face,
dans lequel la partie de noyau isolante et la partie de noyau conductrice supportent toutes deux la première feuille de face et la seconde feuille de face, et
dans lequel la partie de noyau conductrice est isolée électriquement de l'environnement extérieur par les première et seconde faces pour chauffer de manière résistive la première feuille de face,
dans lequel le noyau définit un axe longitudinal s'étendant entre les première et seconde feuilles de face avec une partie de noyau conductrice disposée latéralement entre l'axe longitudinal et soit la première feuille de face, soit la seconde feuille de face, **caractérisé en ce que** le noyau inclut un corps alvéolaire ou un corps en mousse qui s'étend entre une surface du noyau adjacent à la première feuille de face et une surface opposée du noyau adjacent à la seconde feuille de face ; et **en ce qu'**une partie du noyau définissant la partie de noyau conductrice inclut un matériau conducteur qui est disposé de manière conforme sur le corps alvéolaire ou le corps en mousse ou qui est un dopant disposé à l'intérieur du corps alvéolaire d'un côté ou de l'autre de l'axe.
